(19) Europäisches Patentamt
European Patent Office
Office européen des brevets

(11) EP 4 298 167 B1

(12) EUROPEAN PATENT SPECIFICATION

(45) Date of publication and mention of the grant of the patent:
**01.10.2025 Bulletin 2025/40**

(21) Application number: **22706686.7**

(22) Date of filing: **23.02.2022**

(51) International Patent Classification (IPC):
***C09D 5/16*** *(2006.01)* ***C09D 5/00*** *(2006.01)*

(52) Cooperative Patent Classification (CPC):
**C09D 5/16; C09D 5/00**

(86) International application number:
**PCT/IB2022/051568**

(87) International publication number:
**WO 2022/180521 (01.09.2022 Gazette 2022/35)**

# (54) PROCESS FOR PREPARING AN ANTIMICROBIAL COATING COMPOSITION, ANTIMICROBIAL COATING COMPOSITION AND USE THEREOF TO CONFER ANTIMICROBIAL PROPERTIES TO THE SURFACE OF A SUBSTRATE

VERFAHREN ZUR HERSTELLUNG EINER ANTIMIKROBIELLEN BESCHICHTUNGSZUSAMMENSETZUNG, ANTIMIKROBIELLE BESCHICHTUNGSZUSAMMENSETZUNG UND IHRE VERWENDUNG ZUR VERMITTLUNG ANTIMIKROBIELLER EIGENSCHAFTEN AUF DIE OBERFLÄCHE EINES SUBSTRATS

PROCÉDÉ DE PRÉPARATION D’UNE COMPOSITION DE REVÊTEMENT ANTIMICROBIENNE, COMPOSITION DE REVÊTEMENT ANTIMICROBIENNE ET UTILISATION DE CELLE-CI POUR CONFÉRER DES PROPRIÉTÉS ANTIMICROBIENNES À LA SURFACE D’UN SUBSTRAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**ME**

(30) Priority: **25.02.2021 IT 202100004457**

(43) Date of publication of application:
**03.01.2024 Bulletin 2024/01**

(73) Proprietor: **ENI S.p.A.**
**00144 Roma (IT)**

(72) Inventors:
- **ASSANELLI, Giulio**
**20097 San Donato Milanese (MI) (IT)**
- **NOTARI, Marcello**
**20097 San Donato Milanese (MI) (IT)**
- **AMICO, Antonio**
**20097 San Donato Milanese (MI) (IT)**
- **PO, Riccardo**
**28100 Novara (IT)**
- **SERBOLISCA, Luca**
**20097 San Donato Milanese (MI) (IT)**

(74) Representative: **Bottero, Carlo et al**
**Barzanò & Zanardo S.p.A.**
**Via Borgonuovo, 10**
**20121 Milano (IT)**

(56) References cited:
**CN-A- 103 191 467**
**CN-A- 107 163 654**
**CN-A- 109 382 003**
**CN-A- 109 568 634**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for preparing an antimicrobial coating composition, an antimicrobial coating composition and use thereof to confer antimicrobial properties to the surface of a substrate.

As is known, a considerable number of infections develop by contact between a human subject and surfaces infected with bacteria or viruses, such as the surfaces of consumer goods containers, means of transport, furnishing objects, common spaces, equipment, clothing, or the surfaces of medical devices (prostheses, catheters, bandages, etc.). These surfaces, in fact, contain traces of compounds that are nutritious for microorganisms (sugars, phosphorous, oils, etc.), which favour the proliferation of bacterial colonies and the adhesion of viral particles.

To reduce the risk of infection, surfaces exposed to possible microbiological contamination are known to be coated with antimicrobial coatings, particularly paints, which act either by preventing the adhesion of microorganisms or by reducing their proliferation through a cytotoxic action (biocidal action).

Antimicrobial coatings are generally obtained by applying compositions, generally in liquid form, to the coating surfaces. In general, a coating composition contains: (1) at least one *film-forming agent* (also called *binder*), (2) volatile components (e.g. solvents), (3) pigments and (4) additives. In antimicrobial coating compositions, the antimicrobial effect is generally achieved by incorporating one or more additives with antimicrobial properties into the compositions.

The antimicrobial efficacy of the coating depends, among other factors, on the compatibility of the antimicrobial agent used with the other components of the coating composition, in particular, on its compatibility with the film-forming agent. Furthermore, from the point of view of the preparation, it is important that the antimicrobial agent can be easily dispersed in the coating composition and that the resulting dispersion is sufficiently stable over time, i.e. it does not undergo phenomena of phase separation or sedimentation for a sufficiently long period of time.

In the state of the art, graphene-based materials, in particular graphene in oxidized form (graphene oxide), are known and used as antimicrobial agents in antimicrobial coating compositions. An example of such use of graphene is the commercial product "Dr. Wall", from the company Graphene.CA, USA, a water-based acrylic paint containing a combination of graphene and $TiO_2$.

Further examples of the use of graphene as an antimicrobial agent in coating compositions are described in Cacaci M. et al. (2019) Graphene Oxide Coatings as Tools to Prevent Microbial Biofilm Formation on Medical Device*,* in: Donelli G. (eds) Advances in Microbiology, Infectious Diseases and Public Health. Advances in Experimental Medicine and Biology, vol 1282. Springer, Cham. https://doi.org/10.1007/5584 2019 434.

A limitation of the coating compositions containing graphene, known in the art, consists in the limited antimicrobial efficacy of the obtainable coatings, both in terms of reduced antimicrobial action and in terms of duration of this action over time.

CN109568634A describes an antibacterial composition comprising a composite made of reduced graphene oxide and menthol, which is prepared by reducing graphene oxide with a reducing agent such as ascorbic acid, oxalic acid, hydrazine hydrate (par. 0026): thus, it is possible to form a composite between reduced graphene oxide and menthol in a carrier to obtain an antibacterial layer to be applied to medical garments.

CN109382003A describes a graphene-based filtration membrane with the effect of purifying and sterilizing water. The membrane consists of a porous substrate, e.g., polymeric material, on which an antibacterial layer including graphene and graphene oxide is applied, and on top of the antibacterial layer, an absorbent layer with holes (par. 0072) which includes graphene, graphene oxide, graphene oxide/metal oxide composite, and graphene/hydroxide is provided.

CN107163654A describes a process to prepare a composite antibacterial material of nano-zinc and graphene oxide. The process involves mixing a nano-zinc compound with graphene oxide in a polar solvent, e.g. N,N-dimethylacetamide, by subjecting the mixture (mixture I) to ultrasonication, adding a silane coupling to functionalize the zinc oxide to obtain a solution II, centrifuging the solution II to obtain a precipitate, mixing the precipitate with graphene oxide in a solvent under ultrasonic agitation to obtain solution III, and centrifuging the solution III so as to obtain the solid antibacterial nanozinc composite. The antibacterial nano-zinc composite is then added to an aqueous polyurethane dispersion under ultrasonic stirring to obtain an antibacterial coating (para. 0021) to be applied inside water pipes.

CN103191467A describes a method for preparing an antibacterial coating for attaching growth factor cells to a metal surface of a medical device, wherein it is provided a graphene oxide carboxylation step to subsequently obtain a solution of an antibiotic grafted to the carboxylated graphene oxide, into which a medical metal coated with dopamine is then dipped.

In view of the aforementioned state of the art, there is therefore a felt need for antimicrobial coating compositions, in particular containing graphene oxide as an antimicrobial agent, which overcome the drawbacks of compositions known in the art.

In particular, it is desirable to have coating compositions which have a more effective and prolonged antimicrobial action over time than the compositions of the prior art.

It is also desirable that antimicrobial coating compositions can be prepared easily, quickly and economically.

The Applicant has now found that this object and others, which will be better illustrated below, can be achieved by

subjecting an aqueous dispersion of graphite to an oxidation and exfoliation process, carried out under certain operating conditions, which allows to obtain an aqueous dispersion of graphene oxide which, in addition to being homogeneous and stable over time, can be easily mixed with a film-forming agent in a wide range of weight ratios. The aqueous dispersion of graphite comprises at least one oxidizing agent (e.g., hydrogen peroxide) and is subjected to a high shear homogenization step (equal to or greater than 1000 rpm) during which graphite exfoliation takes place with formation of graphene nanoplates and concomitant oxidation of graphene to graphene oxide (hereinafter also referred to as GO alone) .

Coating compositions obtained from the aforementioned aqueous dispersion of graphene oxide can be applied to the surface of a substrate to form a coating film whose antimicrobial action is superior in terms of biocidal efficacy and prolonged than that of compositions known in the state of the art.

It has also been observed that the antimicrobial action of the coating can be increased by including one or more conventional antimicrobial agents in the graphene oxide-containing coating composition.

In accordance with a first aspect, therefore, the present invention relates to a process for preparing an antimicrobial coating composition according to claim 1.

In accordance with a second aspect, the present invention relates to an antimicrobial coating composition obtainable by the aforementioned process, in accordance with claim 12.

In accordance with a third aspect, the present invention relates to the use of an antimicrobial coating composition according to claim 13 to impart antimicrobial properties to a substrate.

In accordance with a fourth aspect, the present invention relates to a method for imparting antimicrobial properties to a substrate according to claim 14.

Further features of the above aspects of the present invention are defined in the dependent claims.

The characteristics and advantages of the method according to the present invention will become more evident from the following description. The description and the following examples of embodiment are provided for the sole purpose of illustrating the present invention and are not to be understood in a sense limiting the scope of protection defined by the appended claims.

The limits and the numerical intervals expressed in the present description and in the claims also include the mentioned numerical value or numerical values. Moreover, all the values or sub-intervals of a limit or numerical interval shall be understood to be specifically included as if they were explicitly mentioned.

The compositions according to the present invention may "comprise", "consist of" or "consist essentially of the" essential and optional components described in the present description and in the appended claims. The expression "essentially consists of" means that the composition or component may include additional ingredients, but only to the extent that the additional ingredients do not materially alter the essential characteristics of the composition or component.

For the purposes of the description and of the appended claims, the terms graphene and graphene oxide are to be understood according to the definitions reported in ISO/TS 80004-13:2017 (*Nanotechnologies - Vocabulary - Part 13: Graphene and related two-dimensional (2D) materials*). In particular, the term graphene includes, in addition to monolayer graphene, the materials formed by 2 to 10 superimposed layers of graphene, such as *bilayer graphene, "few-layer graphene"* composed of three to ten layers of graphene and *graphene nanoplates* consisting of superimposed layers of graphene and having a thickness in the range from 1 nm to 3 nm and lateral dimensions from 100 nm to 100 micrometres.

For the purpose of this description and of the appended claims, the term "antimicrobial" refers to a substance capable of inactivating any biochemical function of microorganisms (understood as organisms sized on the micrometre scale, such as fungi, bacteria and viruses).

For the purposes of the description and of the appended claims, the molecular weights of the polymeric substances are expressed as mean weight MW, determined by Gel Permeation Chromatography (GPC).

In accordance with the present invention, the process of preparing the antimicrobial coating composition comprising the following steps in sequence:

a. providing an aqueous dispersion comprising graphite, at least one oxidizing agent and optionally at least one antimicrobial agent;
b. subjecting the aqueous dispersion from step a to high shear homogenization by mixing said dispersion at a mixing speed equal to or greater than 1000 rpm, to obtain an antimicrobial aqueous dispersion comprising graphene oxide;
c. mixing the aqueous antimicrobial dispersion comprising graphene oxide with at least one film-forming agent to obtain the antimicrobial coating composition, said film-forming agent being selected from acrylic resin, vinyl resin, styrenic resin, alkyd resin, epoxy resin, polyester resin, polyvinyl acetate resin and their mixtures.

The graphite used in step a is preferably high surface area graphite (HSAG) with high crystalline order within the structural layers. Preferably, graphite has a surface area in the range from 200 to 500 $m^2/g$, as determined by the ASTM D 6556 method.

Preferably, graphite has a turbostratic structure with a relatively low number of stacked layers, e.g. 30 to 40 (approximately 35). Preferably, the lateral dimensions of the graphitic layers are about 300 - 400

nm. The dimensions can be determined, for example, as described in Biomacromolecules 2017, 18, 3978-3991.

Graphite preferably has a carbon content equal to or greater than 99% by weight. For example, the chemical composition of graphite, determined by elemental analysis, may be as follows: carbon (99.5% weight/weight), hydrogen (0.4% weight/weight), nitrogen 0.1% (weight/weight).

The concentration of graphite in the aqueous dispersion of step a is preferably in the range from 0.1 % to 10 %, more preferably in the range from 0.5 % to 5 %, even more preferably in the range from 0.8 % to 2 %, the aforesaid percentages being percentages by weight referred to the weight of the dispersion.

In step a, the aqueous graphite dispersion comprises at least one oxidizing agent to oxidize the graphene produced by exfoliation to graphene oxide.

The oxidizing agent can be selected without any particular limitation from those generally used in the state of the art for the preparation of graphene oxide. In one embodiment, the oxidizing agent is selected from: oxygen, hydrogen peroxide, air in the presence of potassium hydroxide, nitric acid, tert-butyl peroxide, m-chloroperbenzoic acid, ozone, sulphuric acid, permanganate ion (e.g. $KMnO_4$) , chromate ion ($K_2Cr_2O_7$), hypochlorite ion and their mixtures.

In one embodiment, the oxidizing agent is selected from: oxygen, hydrogen peroxide, air in the presence of potassium hydroxide, tert-butyl peroxide, m-chloroperbenzoic acid, ozone, chromate ion ($K_2Cr_2O_7$), hypochlorite ion and their mixtures.

In a preferred embodiment, the oxidizing agent is selected from: oxygen, hydrogen peroxide, tert-butyl peroxide, m-chloroperbenzoic acid, ozone, chromate ion ($K_2Cr_2O_7$), hypochlorite ion and their mixtures.

In one embodiment, the oxidizing agent is preferably hydrogen peroxide ($H_2O_2$), optionally mixed with acetic acid.

In general, the acetic acid that is added to $H_2O_2$, either together or separately, can bring several advantages, such as:

1) transferring acidic protons useful for salifying the amino groups of chitosan;
2) increase the "charge potential" (Z potential) of the mixture to increase the stability thereof.

In addition, the acetic acid in combination with $H_2O_2$ can form peracetic acid, which is extremely active both as an oxidizing agent and as an anti-bacterial agent.

Generally, hydrogen peroxide is used in the form of an aqueous solution containing a concentration of $H_2O_2$, expressed as percentage by weight of $H_2O_2$ with respect to the weight of the solution, in the range from 0.5% to 30%, preferably from 2% to 20%, even more preferably 5% to 15%. Optionally, the oxidizing solution may also contain acetic acid, preferably in a molar ratio $H_2O_2$:$CH_3COOH$ in the range 30:0.01, preferably 20:0.05, even more preferably 10:0.1.

Preferably, the water of the aqueous dispersion is demineralized water and/or industrial and/or drinking water. Preferably, the demineralized water has an electrical conductivity in the range from 30 microS/cm to 100 microS/cm, preferably in the range from 45 microS/cm to 50 microS/cm.

Preferably, the industrial and/or drinking water has an electrical conductivity in the range from 3000 microS/cm to 100 microS/cm, preferably in the range from 500 microS/cm to 50 microS/cm.

Preferably, water is present in the antimicrobial dispersion composition in an amount in the range from 70 % to 98 %, preferably 80 % to 95 %, even more preferably 88 % to 92 %, the aforesaid percentages being percentages by weight referred to the weight of the antimicrobial coating composition.

High shear homogenization (step b) refers to mixing the graphite dispersion at a mixing speed equal to or greater than 1,000 rpm, preferably equal to or greater than 2,000 rpm, more preferably equal to or greater than 3,000 rpm.

Preferably, the mixing speed is equal to or less than 10,000 rpm, preferably equal to or less than 9,000 rpm, plus preferably equal to or less than 6,000 rpm.

In one embodiment, the mixing speed is in the range 4,000 rpm - 9,000 rpm, more preferably in the range 5,000 rpm - 7,000 rpm.

High shear homogenization can be achieved with commercially available conventional devices such as rotor-stator mixers. These mixers comprise a mixing element (rotor) at high speed (typically 10 to 50 m-s-1) and a fixed element (stator) which are positioned in close proximity to each other so that the gap between the end of the rotor and the walls of the stator is very narrow, typically from 100 micrometres to 3 millimetres.

The duration of the high shear homogenization step is preferably in the range from 1 hour to 24 hours, more preferably in the range from 5 to 10 hours, even more preferably in the range from 8 to 9 hours.

At the end of step b, an aqueous dispersion is obtained comprising graphene oxide in the form of nanoplates.

Preferably, the antimicrobial coating composition comprises graphene oxide in an amount in the range from 0.1% to 10%, preferably in the range from 0.5% to 5%, more preferably in the range from 0.8% to 2%, said percentages being percentages by weight referred to the weight of the antimicrobial coating composition.

The dispersion of graphene oxide is homogeneous and stable, with no phase separation or sedimentation observed over a relatively long period of time (at least one month) under conditions at room temperature and atmospheric

pressure.

The graphene oxide dispersion is compatible with the addition of one or more film-forming agents, i.e. it can be mixed with one or more film-forming agents in a wide range of concentrations. The film-forming agent has the function of promoting the formation and adhesion of a coating film on the surface of the substrate which is to be made antimicrobial.

For the purposes of the present invention, conventional film-forming agents, such as polymeric resins generally used in the preparation of coating compositions, varnishes, paints, enamels, etc., may be used.

Film-forming agents which are used for the purposes of the present invention are: acrylic resin, vinyl resin, styrenic resin, alkyd resin, epoxy resin, polyester resin, polyvinyl acetate resin and their combinations.

In the antimicrobial coating composition, the film-forming agent is preferably present in an amount in the range from 1% to 99%, more preferably in the range from 1.5% to 75%, even more preferably in the range from 3% to 50%, said percentages being percentages by weight of the dry resin referred to the weight of the antimicrobial coating composition.

Preferably, steps a - c are carried out at a temperature in the range from 25°C to 90°C, more preferably in the range from 35°C to 85°C, even more preferably in the range from 55°C to 80°C.

Preferably, steps a - c are carried out at an absolute pressure in the range from 0.5 bar to 2 bar, more preferably in the range from 0.8 bar to 1.2 bar, even more preferably at atmospheric pressure.

In a preferred embodiment, the antimicrobial coating composition comprises at least one additional antimicrobial agent other than graphene oxide.

In a further preferred embodiment, the antimicrobial coating composition comprises at least two further antimicrobial agents, other than graphene oxide.

The antimicrobial agent may be selected from, for example: quaternary ammonium salt; polyglycol having a molecular weight in the range from 200-12,000 g/mol; polysaccharide having antimicrobial properties, preferably chitosan, galactan, mannan and laminarine; metal ion having antimicrobial properties, preferably silver ions, sodium ions and zinc ions; chlorinated isothiazole; and their mixtures.

In a particularly preferred embodiment, the at least one antimicrobial agent comprises: quaternary ammonium salt, preferably benzalkonium salt; molecular weight polyglycol in the range 200 - 12,000 g/mol; silver ion.

The quaternary ammonium salts can be selected from quaternary ammonium salts containing benzyl groups and having hydrocarbon chains of various lengths (e.g. benzalkonium chloride, benzethonium chloride, benzalkonium bromide). Preferably, the quaternary ammonium salts have the following general formula I

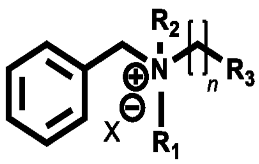

(I)

wherein:

- $R_1$ and $R_2$ are independently an alkyl group containing a number of carbon atoms comprised between 1 and 10, preferably between 1 and 5 and even more preferably between 1 and 2;
- $R_3$ is an alkyl group containing a number of carbon atoms comprised between 1 and 10, preferably between 1 and 5 and even more preferably between 1 and 2;
- n is an integer comprised between 1 and 20, preferably between 6 and 15 even more preferably between 8 and 12;
- X represents a halogen counterion selected from fluorine, chlorine, bromine, iodine, preferably chlorine and bromine, even more preferably chlorine.

In one embodiment, quaternary ammonium salts have a polymeric structure. An example of such polymeric salts are polydiallyldimethylammonium halide compounds having the following general formula II

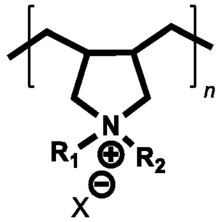

(II)

wherein:

- $R_1$ and $R_2$ are an alkyl group containing a number of carbon atoms from 1 to 10, preferably from 1 to 5 and even more preferably from 1 to 2;
- n indicates the number of repetitive units within the polymeric structure;
- n is an integer comprised between 100 and 3000, preferably between 500 and 2500 even more preferably between 1000 and 2000;
- X represents a halogen counterion selected from fluorine, chlorine, bromine, iodine, preferably chlorine and bromine, even more preferably chlorine.

The molecular weight Mw of the salts of formula II is preferably comprised between 20,000 g/mol and 1,000,000 g/mol, preferably between 80,000 and 600,000 g/mol more preferably between 200,000 and 350,000 g/mol.
The polyglycols usable as antimicrobial agents, preferably polyethylene glycol, have a molecular weight Mw comprised between 200 g/mol and 12,000 g/mol, preferably between 250 and 6,000 g/mol, more preferably between 300 and 3,000 g/mol.
The polysaccharides having antimicrobial properties usable for the purposes of the present invention are preferably selected from: chitosan, galactan, mannan, laminarine and their mixtures. These compounds preferably have a molecular weight Mw comprised between 50,000 g/mol and 500,000 g/mol, more preferably between 150,000 and 350,000 g/mol, even more preferably between 190,000 and 310,000 g/mol.
Metal ions having antimicrobial properties are preferably selected from: silver ions, sodium ions, zinc ions and copper ions, more preferably selected from silver ions, sodium ions and copper ions. Preferably, these ions are present in the antimicrobial coating composition in the form of corresponding metal salts, such as nitrate salts, chlorinated salts, acetate salts and sulphodiazines. Examples of sulphodiazine salts are compounds with the following general formula III

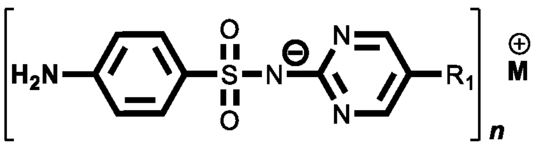

III

wherein:

- $R_1$ is equal to hydrogen or an alkyl group containing a number of carbon atoms from 1 to 10, preferably from 1 to 5, even more preferably methyl;
- M is selected from silver, zinc and sodium,
- n is either 1 or 2, depending on the valence of the metal counterion M.

The metal salts can be used as such, in the form of an aqueous solution or solutions in water-soluble solvents based on alkanolamines (e.g. ethanolamine) or diamines (e.g. ethylenediamine).
Preferably, in order to achieve more stable aqueous dispersions over time, the metal ions are used in combination with at least one polysaccharide, for example of the type described above. Preferably, the polysaccharide is added to the solution containing the metal ions in an amount in the range from 0.2% to 5%, preferably 0.3% to 4%, even more preferably 0.5% to 2%, the aforesaid percentages being percentages by weight referred to the weight of the solution.
The chlorinated isothiazoles are preferably selected from: 5-chloro-2-methyl-2H-isothiazol-3-one and 2-methyl-2H-isothiazol-3-one.
The isothiazolinone compounds can be selected, for example, from those with the following general formula IV

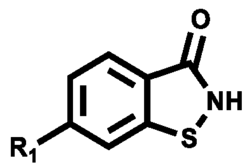

IV

wherein:

- $R_1$ is equal to hydrogen or an alkyl group containing a number of carbon atoms from 1 to 10, preferably from 1 to 5, even

more preferably methyl group. Preferably, the isothiazolinone compound is benzisothiazolinone.

In general, the antimicrobial agent used in combination with graphene oxide is present in the antimicrobial aqueous dispersion in an overall amount in the range from 0.1 % to 20 %, more preferably in the range from 0.5 % to 10 %, the aforesaid percentages being percentages by weight referred to the total weight of the antimicrobial aqueous dispersion.

Preferably, the weight ratio of the total weight of the antimicrobial agent to the graphene oxide in the coating composition is in the range from 0.01 to 5, more preferably 0.05 to 2, even more preferably 0.08 to 0.15.

For the formulation of the coating composition, the antimicrobial agent may be used pure or in the form of an aqueous solution, the latter preferably at a concentration, expressed as percentage by weight of the antimicrobial agent with respect to the weight of the solution, in the range from 20% to 90%, preferably in the range from 30% to 80%, even more preferably in the range from 40% to 60%.

In the case of metal salts, the aqueous or water-soluble solvent solution of the antimicrobial agent preferably has a concentration, expressed as percentage by weight of the metal salt with respect to the weight of the solution, in the range from 0.1% to 3%, preferably in the range from 0.2% to 2%, even more preferably in the range from 0.3% to 1.5%.

In the case of polysaccharides, particularly of chitosans, the aqueous solution of the antimicrobial agent preferably has a concentration, expressed as percentage by weight of the polysaccharide with respect to the weight of the solution, in the range from 0.3% to 3%, preferably in the range from 0.5% to 2%, even more preferably in the range from 0.8% to 1.5%.

In a preferred embodiment, the solution containing the polysaccharide or the metal salt is acidified with an amount of glacial acetic acid, expressed as percentage by weight with respect to the weight of the polysaccharide solution, in the range from 1% to 3%, preferably in the range from 0.5% to 2%, even more preferably in the range from 0.1% to 1%.

In a preferred embodiment, the antimicrobial coating composition comprises one or more antimicrobial agents selected from: benzalkonium salts, chitosan and silver ions.

Preferably, the antimicrobial coating composition contains all three of the aforesaid antimicrobial agents.

This combination of antimicrobial agents allows to obtain a coating composition having antimicrobial efficacy against a wide range of microorganisms.

The antimicrobial agent can be added, indifferently, to the aqueous dispersion containing graphite in step a, in the dispersion containing graphene oxide obtained in step b or in both. The antimicrobial agent can be added in the form of an aqueous solution. When two or more antimicrobial agents are present, they can be added together or separately, each being able to be dosed in one or more aliquots. The addition of the antimicrobial agent is preferably followed by a high-shear homogenization treatment of the resulting dispersion, e.g. under the conditions described above for step b.

The antimicrobial coating composition according to the present invention optionally comprises conventional additives of the type generally employed in the formulation of coating compositions, such as, for example, colouring agents (pigments or dyes), solvents, coalescing agents, surfactants, thickeners, rheology modifiers, compatibilizing agents and the like.

The graphene oxide (GO) of the present invention - which is an "edge oxidized" graphene oxide (EOGO)- does not undergoes any reaction of chemical reduction, functionalization, grafting, carboxylation, formation of composite/-complex or the like when it is in the presence of the other ingredients used in the present composition such as, for example, antimicrobic agents, film-forming agent, acetic acid.

The only possible interaction, if any, are noncovalent bond interactions.

The process for preparing the antimicrobial coating composition according to the present invention can be carried out with conventional devices and equipment known to the person skilled in the art.

In general, the components of the aqueous dispersion prepared in step a can be mixed in any order. In some cases it may be preferable to add two or more antimicrobial agents separately from each other, at later times, to avoid possible interactions between these agents. This is, for example, the case with the addition of benzalkonium chloride and silver nitrate, the interaction of which could induce AgCl precipitation.

It has also been observed that polysaccharides, in particular the chitosan, can act as promoters of the graphite exfoliation process, while quaternary ammonium salts, in particular benzalkonium salts, can act as intercalating agents between graphene layers (e.g. *few layer graphene*). Therefore, in a preferred embodiment the exfoliation step is conducted in the presence of at least one polysaccharide, preferably chitosan. In another preferred embodiment, the quaternary ammonium salt, preferably benzalkonium salt, is added to the dispersion after the graphite has been at least partially exfoliated.

The antimicrobial coating composition according to the present invention may be used to impart antimicrobial properties to the surface of a substrate. To this end, the composition can be applied with a technique suitable for depositing a liquid coating composition on the surface of a substrate among those generally used in the painting sector, such as by spraying, dipping or by means of a brush. After application, the liquid phase contained in the coating composition is evaporated to form a properly cured and dry coating film on the substrate. Generally, evaporation of the liquid phase is

achieved by exposure to air, at room temperature or above. To reduce the times for drying and formation of the antimicrobial coating, the coating composition can be dried in an oven.

Examples of substrates coatable with the antimicrobial coating composition of the present invention are surfaces of plastic, metal, wood, concrete, stone, polycarbonate, plexiglass, PVC, latex, ceramics and the like.

The coating composition according to the invention can also be applied to previously coated substrates, for example with varnishes, paints, lacquers and other types of coatings.

The antimicrobial efficacy of the compositions according to the present invention can be measured in terms of the reduction in the total number of living microbes in contact with the antimicrobial coating.

For the purposes of the present invention, the antibacterial efficacy can be determined, for example, by means of the ASTM E2180 - 18 method.

In general, the coating compositions of the present invention can be used against potentially pathogenic microorganisms that are present in the environment.

Microorganisms against which the antimicrobial coating composition is effective include fungi, algae, bacteria and viruses. Examples of fungi are: *Aspergillus niger* and *Penicillium funiculosum.* Examples of bacteria are: *Gordonia amicalis, Microbacterium hydrocarbonoxidans, Pseudomonas taiwanensis, Pseudomonas resinovorans* and *Escherichia coli.*

Further pathogenic bacteria on which the coating compositions of the present invention may be effective are: *Listeria monocytogenes, Staphylococcus aureus, Pseudomonas aeruginosa, Salmonella typhi*murium, *Streptococcus mutans, Staphylococcus epidermidis, Vibrio harveyi* and *Enterococcus faecalis.*

The coating compositions are also effective against viruses. Viruses are small infectious agents (from 0.02 μm up to a maximum of 1 μm) consisting of biological material that are unable to live or reproduce autonomously except from within a host cell whose functional mechanisms they exploit. Examples of viruses are: Coronavirus, in particular, the Sars-Cov2 virus.

For the purposes of the present invention, the antiviral efficacy of the coating compositions can be determined for example as indicated by the ISO 21702:2019 standard *"Measurement of antiviral activity on plastics and other non-porous surface".*

To further understand the characteristics of the present invention, the following embodiment examples are provided below.

## EXAMPLES

### 1. Materials

The graphite used is High Surface Area Graphite (HSAG) Nano 27 from Asbury Graphite Mills, Inc. (Asbury, NJ, USA). Graphite has the following characteristics:

- surface area 250 $m^2$/g,
- chemical composition from elemental analysis (U.S. Standard Test Sieves): carbon 99.82%, ash 0.18%, humidity 0.97%;
- number of stacked layers equal to approximately 50.

Two different commercial water-based products, both based on acrylic resins, were used as film-forming agents:

A. Adesital GS primer from ADESITAL S.p.A., Italy (20% by weight of solid residue);
B. San Marco primer from San Marco Group S.p.A., Italy (containing the following antibacterial compounds: 0.005% - 0.01% 1,2-benzisothiazol-3(2H)-one; 0. 00015% - 0. 0015% of a mixture of 5-chloro-2-methyl-2H-isothiazol-3-one and 2-methyl-2H-isothiazol-3-one).

For comparison, a coating was made with the commercial composition "Dr. Wall" (Graphene.CA, USA).

### 2. Antimicrobial efficacy test

The antimicrobial efficacy of a coating obtained with the above compositions was tested in accordance with the ASTM E2180 - 18 method.

The antiviral efficacy was instead tested in accordance with ISO 21702:2019 *"Measurement of antiviral activity on plastics and other non-porous surface"* with some modifications as described below.

For the above tests, each coating composition, including the compositions used for comparative purposes, was deposited on a microscope slide, which was previously scratched (rubbed with sandpaper), flamed, sterilised with ethanol

and coated with the same film-forming agent present in the coating composition. For each sample, two depositions per day (six hours apart) were carried out for three consecutive days inside an aspirated hood.

Before carrying out the antibacterial test, the adhesion of the coating film to the slide was verified by repeatedly washing its surface with demineralized water and wiping with an absorbent cloth.

2.1 ASTM E2180 - 18 test (antibacterial efficacy)

The test according to ASTM E2180 - 18 was conducted on four different bacterial species belonging to risk class 1 (not dangerous to human health), of which two gram-positive and two gram-negative, in order to verify the antimicrobial efficacy of the coatings on bacteria with two different cell wall structures. The 4 bacterial strains used are: *Gordonia amicalis* and *Microbacterium hydrocarbonoxidans* (Gram+); *Pseudomonas taiwanensis* and *Pseudomonas resinovorans* (Gram-).

The antibacterial efficacy was determined by evaluating the reduction in the number of viable bacteria in the sample with the antimicrobial coating compared to a control sample without the coating according to the following process. Approximately $10^8$ viable cells (CFU) for each strain, suspended in 100 $\mu$l of sterile aqueous physiological solution, were deposited on the surface of the coated slide. After a few minutes of drying under a hood, the bacteria were left in contact with the coating at room temperature for an exposure time of 5 hours. At the end of the exposure, the slide was introduced into a sterile screw-capped tube containing 10 ml of saline and vigorously vortexed for 5 minutes to elute the biomass from the surface of the coating. The resulting bacterial suspension was then transferred to the surface of petri dishes containing agarised culture medium to perform a count of the survived micro-organisms by serial dilution (1:10) of the bacterial suspension

The seeded plates were left at room temperature for a period of not less than 1 week. After this period, the plates were checked and the colony count (CFU) was carried out on the most suitable dilutions for the purpose.

The same process was applied to the control sample, consisting of the slide coated with only the film-forming agent (primer A or B), corresponding to the film-forming agent present in the antimicrobial coating composition.

The results are expressed in terms of:

- difference between Log10 of the number of bacteria at time zero and Log10 of the number of bacteria after the 5-hour assay;
- Percentage of viable bacteria survived compared to those of the control sample;
- Percentage of bacterial kill measured as %(kill) = 100 - % (viable bacteria).

2.2 ISO 21702:2019 test (antiviral efficacy)

The test according to ISO 21702:2019 was conducted on samples inoculated with "SARS-CoV-2" virus, responsible for COVID-19.

Cell culture

Vero E6 cells (monkey renal epithelial cells) were maintained in culture in DMEM medium to which 10% heat-inactivated foetal bovine serum, 2 mM glutamine, 100 units/ml penicillin, 100 $\mu$g/ml streptomycin were added.

Isolation of SARS-CoV-2 from nasal swabs

SARS-CoV-2 was isolated from 500 $\mu$l nasal swab, inoculated onto Vero cells at 80% confluence; after 3 hours incubation at 37 °C with 5% $CO_2$ , the inoculum was removed and the cells were incubated in the medium for 72 hours until the development of a clear cytopathic effect (CPE).

The quantification of viral copy number in supernatants was performed by quantitative real-time PCR (qRT-PCR) as described in "World Health Organization, WHO. Coronavirus disease (COVID-19) technical guidance: Laboratory testing for 2019-nCoV in humans. US CDC Real-time RT-PCR Panel for Detection 2019-Novel Coronavirus (28 January 2020).

SARS-CoV-2 was concentrated with PEG, following the manufacturer's instructions and the viral titre was assessed by Plaque assay method, using dilutions from $10^1$ to $10^9$. The complete nucleotide sequence of the SARS-CoV-2 strain thus isolated has been deposited at the Gen Bank, NCBI (accession number GeneBank: MT748758)

For each sample, the antiviral test area consisting of a square of (25$\pm$ 2) mm x (25$\pm$ 2) mm was selected on the slide.

Prior to testing, each sample was sterilised by exposure to UV radiations for 20 minutes under a laminar flow hood to eliminate any potential bacterial contamination, and then deposited in a petri dish.

The test was carried out in the following way. A volume of 0.07 ml of viral suspension (9 x$10^5$ PFU/ml) was placed on the sample of the material to be tested. The viral inoculum was covered with a 25 x 25 mm film and the samples were incubated for 2 to 4 hours at 25°C.

At the end of 2 to 4 hours of contact, 10 ml of SCDLP broth were added to each sample and then the Plaque assay was performed.

The Plaque assay was performed in 6-well plates by assessing the presence of virus in the SCDLP medium recovered from the Petri dishes. For each treatment 3 serial dilutions 1 to 10 were made in complete medium for Vero E6 cells and 0.4 ml of each dilution were added to the cell monolayer, in duplicate. After 2 hours, the inoculum was removed, the cells were washed with 2 ml of medium and covered with 0.3% agarose dissolved in complete medium. After 48 hours incubation at 37 °C with 5% $CO_2$, the cells were fixed with 4% formaldehyde and, after removal of the agarose layer and washing, they were stained with methylene blue. The plaques were counted and the results expressed as Plaque Forming Units (PFU) per ml.

At time 0, i.e. immediately after virus deposition, 10 ml of SCDLP broth were added to some samples and the residual infectivity was assessed by Plaque assay.

Determination of virus infectivity

For each sample, the infectivity of the recovered virus was determined using the following formula:

$$N = (14 \times C \times D \times V) / A$$

where:

- N is the infectivity of the virus recovered per $cm^2$ of sample;
- C is the average number of plaques counted in the two wells of the duplicate;
- D is the dilution factor for the counted wells;
- V is the volume of SCDLP broth added to the sample, in ml;
- A is the surface of the covering film, in $cm^2$.

Calculation of the antiviral activity

The antiviral activity was calculated using the following formula:

$$R = Ut - At$$

where:

- R is the antiviral activity;
- Ut is the average log of the number of plaques (in PFU/$cm^2$) of the reference sample (primer-only coating, after 2 or 4 hours);
- At is the average log of the number of plaques (in PFU/$cm^2$) of the sample treated with the coating composition according to the invention, after 2 or 4 hours.

3. Coating compositions

The coating compositions were prepared using a Silverson L5M-A rotor-stator homogenizer, equipped with an AISI 316 stainless steel head, 290 mm long, 57 mm maximum diameter. The apparatus comprises a glass or steel vessel of variable volume (500 - 2000 ml) in which the liquid dispersion to be homogenized in order to obtain the antimicrobial aqueous dispersion containing graphene oxide was loaded.

An aliquot (approx. 15 g) of the above antimicrobial dispersion containing graphene oxide was subsequently mixed with the desired amount of film-forming agent A or B to obtain the final antimicrobial coating composition.

**Comparative 1: preparation of the slide with Adesital GS primer**

A suitable amount of Adesital GS primer was deposited on microscope slides prepared as described in step 2 above.

**Comparative 2: preparation of the slide with San Marco primer**

A suitable amount of San Marco primer was deposited on microscope slides prepared as described in step 2 above.

**Comparative 3: preparation of the slide with Doctor Nano®**

A suitable amount of the commercial coating composition "Dr. Wall" containing graphene and titanium oxide was deposited on microscope slides previously prepared as described in step 2 above.

**Comparative 4: preparation of HSAG graphite mixture and Adesital GS commercial primer (28PN/20/1)**

A suitable amount of HSAG graphite described in point 1 was mixed at 50% by mass with 50% by mass of Adesital primer. The dispersion thus obtained was mixed by magnetic stirring for about six hours and then deposited on microscope slides prepared as described in point 2 above.

**Example 1: synthesis of dispersion 01 (015PN/20/1 → reference bactericidal test with Adesital Primer; 021PN/20/1 reference bactericidal test with San Marco Primer)**

Into a reactor with 500ml volume it is loaded respectively: graphite Nano 27 marketed by Asbury Carbons (HSAG) (5.1 g), hydrogen peroxide 30% weight/weight Sigma Aldrich (111.5 g), demineralized water (201.1 g), solid silver nitrate Sigma Aldrich (0.5 g) and glacial acetic acid Sigma Aldrich (3.4 g).

At the end of this step, the Silverson mixer is immersed in the reactor and subsequently set at a stirring speed of 5000 rpm. The system is kept under these conditions for 2 hours by monitoring the increase in autogenous temperature, which reaches a value of approximately 70°C. By keeping stirring, a second aliquot of hydrogen peroxide (40.1 g) is added while mixing for a further two hours. Once this period has elapsed, a mixture of chitosan (0.43 g), demineralized water (50.1 g) and glacial acetic acid (0.09 g) is added. The stirring conditions are maintained for a further two hours at an autogenous temperature value of about 60°C. At the end of this period, a mixture of benzalkonium chloride salt (5.1 g) solubilised in water (5.1 g) is added. The whole mixture is stirred for a further two hours until an aqueous dispersion based on graphene oxide is obtained, which is used in subsequent bactericidal tests.

This nanodispersion, after the addition of an amount of Adesital primer equal to 5 % by weight of the whole mixture, is stirred for a period of three hours. At the end of this period, subsequent depositions of this product on microscopy slides are carried out, as described in point 2. Once the depositions have been carried out on the slide with the nanodispersions, it is allowed to dry for about 12 hours in order to favour the fixation of the nanodispersion on the glass surface. The slide thus obtained does not release the deposited substance and is therefore considered suitable for carrying out bactericidal tests.

In a different preparation, the nanodispersion described above, after adding an amount of San Marco primer equal to 5 % by weight of the whole mixture, is stirred for a period of three hours. At the end of this period, subsequent depositions of this product on microscopy slides are carried out, as described in point 2.

Once the depositions have been carried out on the slide with the nanodispersions, it is allowed to dry for about 12 hours in order to favour the fixation of the nanodispersion on the glass surface.

The slide thus obtained does not release the deposited substance and is therefore considered suitable for carrying out bactericidal tests.

**Example 2: synthesis of dispersion 02 (016PN/20/1→ reference bactericidal test with Adesital Primer; 022PN/20/1 reference bactericidal test with San Marco Primer)**

Into a reactor with 500ml volume it is loaded respectively: graphite Nano 27 marketed by Asbury Carbons (HSAG) (5.1 g), hydrogen peroxide 30% weight/weight Sigma Aldrich (112.2 g), demineralized water (200.4 g), and glacial acetic acid Sigma Aldrich (6.84 g).

At the end of this step, the Silverson mixer is immersed in the reactor and subsequently set at a stirring speed of 5000 rpm. The system is kept under these conditions for 2 hours by monitoring the increase in autogenous temperature, which reaches a value of approximately 70°C. By keeping stirring, a second aliquot of hydrogen peroxide 30 % weight/weight Sigma Aldrich (40.4 g) is thus added, in which 0.50 g of solid silver nitrate Sigma Aldrich is dissolved. Mixing is carried out at 5000 rpm for a further two hours. Once this period has elapsed, a mixture of chitosan (0.85 g), demineralized water (50.4 g) and glacial acetic acid (0.43 g) is added. The stirring conditions are maintained for a further two hours at an autogenous temperature value of about 60°C. At the end of this period, a mixture of benzalkonium chloride salt (5.1 g) solubilised in water (5.1 g) is added. The whole mixture is stirred for a further two hours until an aqueous

dispersion based on graphene oxide is obtained, which is used in subsequent bactericidal tests.

This nanodispersion, after the addition of an amount of Adesital primer equal to 5 % by weight of the whole mixture, is stirred for a period of three hours. At the end of this period, subsequent depositions of this product on previously prepared microscopy slides are carried out, as described in point 2. Once the depositions have been carried out on the slide with the nanodispersions, it is allowed to dry for about 12 hours in order to favour the fixation of the nanodispersion on the glass surface. The slide thus obtained does not release the deposited substance and is therefore considered suitable for carrying out bactericidal tests.

In a different preparation, the nanodispersion described above, after adding an amount of San Marco primer equal to 5 % by weight of the whole mixture, is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface. The slide thus obtained does not release the deposited substance and is therefore considered suitable for carrying out bactericidal tests.

**<u>Example 3</u>: synthesis of dispersion 03 (017PN/20/1→ reference bactericidal test with Adesital primer; 023PN/20/1 →reference bactericidal test with San Marco primer)**

Into a reactor (vol. = 500 mL) it is loaded respectively: graphite Nano 27 marketed by Asbury Carbons (HSAG) (4.2 g), hydrogen peroxide 30% weight/weight Sigma Aldrich (111.3 g), demineralized water (198.9 g), and glacial acetic acid Sigma Aldrich (6.80 g).

At the end of this step, the Silverson mixer is immersed in the reactor and subsequently set at a stirring speed of 5000 rpm. The system is kept under these conditions for 1.5 hours by monitoring the increase in autogenous temperature, which reaches a value of approximately 70°C. By keeping stirring, a second aliquot of hydrogen peroxide 30 % weight/weight Sigma Aldrich (40.4 g) is thus added, in which 0.43 g of solid silver nitrate Sigma Aldrich is dissolved. Mixing is carried out at 5000 rpm for a further two hours. Once this period has elapsed, a mixture of chitosan (2.55 g), demineralized water (49.3 g) and glacial acetic acid (2.55 g) is added. The stirring conditions are maintained for a further two hours at an autogenous temperature value of about 60°C. At the end of this period, a mixture of benzalkonium chloride salt (4.25 g) solubilised in water (4.25 g) is added. The whole mixture is stirred for a further two hours until an aqueous dispersion based on graphene oxide is obtained, which is used in subsequent bactericidal tests.

This nanodispersion, after the addition of an amount of Adesital primer equal to 5 % by weight of the whole mixture, is stirred for a period of three hours. At the end of this period, subsequent depositions of this product on previously prepared microscopy slides are carried out, as described in point 2. Once the depositions have been carried out on the slide with the nanodispersions, it is allowed to dry for about 12 hours in order to favour the fixation of the nanodispersion on the glass surface. The slide thus obtained does not release the deposited substance and is therefore considered suitable for carrying out bactericidal tests.

In a different preparation, the nanodispersion described above, after adding an amount of San Marco primer equal to 5 % by weight of the whole mixture, is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface. The slide thus obtained does not release the deposited substance and is therefore considered suitable for carrying out bactericidal tests.

**<u>Example 4</u>: synthesis of dispersion 04 (024PN/20/1 preparation code; 033PN/20/1 code of bactericidal tests at 25 % (033PN/20/1-3, 50 % (033PN/20/1-2, 30 % (36PN/20/1-4, 95 % (36PN/20/1-2/ 1st inoculum), 95 % (36PN/20/1-2/ 2nd inoculum), 95 % (36PN/20/1-2/ 3rd inoculum), 50 % (36PN/20/1-3 1st inoculum), 50 % (36PN/20/1-3 2nd inoculum), 50 % (36PN/20/1-3 3rd inoculum),**

Into a reactor with 500ml volume it is loaded respectively: Nano 27 graphite marketed by Asbury Carbons (HSAG) (5 g), demineralized water (200 g), and a mixture composed of chitosan Sigma Aldrich (0.50 g), demineralized water (49.5 g), glacial acetic acid Sigma Aldrich (0.06 g).

At the end of this step, the Silverson mixer is immersed in the reactor and subsequently set at a stirring speed of 5000 rpm. The system is kept under these conditions for 1.5 hours by monitoring the increase in autogenous temperature, which reaches a value of approximately 70°C. By keeping stirring, a first aliquot of hydrogen peroxide 30 % weight/weight Sigma Aldrich (112.0 g) is added while keeping stirring. At the end of this step, it is mixed for approximately one hour and then a second aliquot of hydrogen peroxide 30 % weight/weight Sigma Aldrich (40.0 g) is added in which 0.50 g of silver nitrate Sigma Aldrich, and glacial acetic acid Sigma Aldrich (3.8 g) are dissolved. Mixing is carried out at 5000 rpm for a further 1.5 hours. Once this period has elapsed, a mixture of chitosan (0.5 g), demineralized Sigma Aldrich water (49.5 g) and glacial acetic acid Sigma Aldrich (0.04 g) is added. The stirring conditions are maintained for a further two hours at an

autogenous temperature value of about 60°C. At the end of this period, a mixture of benzalkonium chloride salt (5 g) solubilised in water (5 g) is added. The whole mixture is stirred for a further two hours until an aqueous dispersion based on graphene oxide is obtained, which is used in subsequent bactericidal tests.

This nanodispersion is divided into three different aliquots in which three different quantities of Adesital GS primer equal to 5%, 50% and 70% by weight of the whole mixture are added. The solutions thus obtained are stirred with magnetic stirrers for a period of three hours. At the end of this period, subsequent depositions of these products on previously prepared microscopy slides are carried out, as described in point 2.

The same slides obtained by deposition of the formulations containing 5 % and 50 % primers were subjected to a second inoculation test that surprisingly confirmed the positive results, in terms of bactericidal activity, obtained with the first inoculation. This result suggests that the bactericidal efficacy of the slides coated with the coating compositions according to the present invention can occur not only thanks to a phenomenon of slow release of bactericidal agent from the coating composition, but also thanks to physical contact phenomena between the coating. and the pathogen. This hypothesis was confirmed by subjecting the specimens from the test with the second inoculum to a third inoculum after immersion in water for one week, with daily changes of the same water.

The specimens thus obtained were then inoculated a third time and again subjected to antibacterial tests. The results are reported in Table 2.

**<u>Example 5</u>: synthesis of dispersion 05 (032PN/20/1 preparation code; 40PN/20/1-1 code of bactericidal tests)**

Into a reactor with 500ml volume it is loaded respectively: Nano 27 graphite marketed by Asbury Carbons (HSAG) (4.7 g), demineralized water (306.2 g), hydrogen peroxide 30% weight/weight Sigma Aldrich (160.14 g).

At the end of this step, the Silverson mixer is immersed in the reactor and subsequently set at a stirring speed of 5000 rpm. The system is kept under these conditions for 3 hours by monitoring the increase in autogenous temperature, which reaches a value of approximately 70°C.

At the end of this period, an aqueous dispersion based on graphene oxide is obtained, which is used in subsequent bactericidal tests.

This nanodispersion after adding an amount of Adesital GS primer equal to 5 % by weight of the whole mixture is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface.

The slide thus obtained does not release the deposited substance and is therefore considered suitable for carrying out bactericidal tests.

**<u>Example 6</u>: synthesis of dispersion 06 (034PN/20/1 preparation code; 40PN/20/1-2 code of bactericidal tests)**

Into a reactor with 500ml volume it is loaded respectively: Nano 27 graphite marketed by Asbury Carbons (HSAG) (4.24 g), demineralized water (306.2 g), hydrogen peroxide 30% weight/weight Sigma Aldrich (160.14 g) containing silver nitrate Sigma Aldrich (0.47 g).

At the end of this step, the Silverson mixer is immersed in the reactor and subsequently set at a stirring speed of 5000 rpm. The system is kept under these conditions for 3 hours by monitoring the increase in autogenous temperature, which reaches a value of approximately 70°C.

At the end of this period, an aqueous dispersion based on graphene oxide is obtained, which is used in subsequent bactericidal tests.

This nanodispersion after adding an amount of Adesital GS primer equal to 5 % by weight of the whole mixture is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface.

The slide thus obtained does not release the deposited substance and is therefore considered suitable for carrying out bactericidal tests.

**<u>Example 7</u>: synthesis of dispersion 07 (039PN/20/1 preparation code; 40PN/20/1-3 code of bactericidal tests)**

Into a reactor with 500ml volume it is loaded respectively: Nano 27 graphite marketed by Asbury Carbons (HSAG) (4.0 g) and demineralized water (252 g). At the end of this step, the Silverson mixer is immersed in the reactor and subsequently set at a stirring speed of 5000 rpm. The system is kept under these conditions for 0.5 hours by monitoring the increase in autogenous temperature, which reaches a value of approximately 70°C.

A mixture composed of benzalkonium chloride salt (4.2 g) solubilised in demineralized water (4.2 g) is then added.

Mixing of the dispersion thus obtained is continued for a further two hours at a temperature of about 70 °C. At the end of this period, hydrogen peroxide 30% weight/weight Sigma Aldrich (136 g) is added and stirring is continued for a further three hours obtaining an aqueous dispersion based on graphene oxide used in subsequent bactericidal tests.

This nanodispersion after adding an amount of Adesital GS primer equal to 5 % of the whole mixture is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface.

The slide thus obtained does not release the deposited substance and is therefore considered suitable for carrying out bactericidal tests.

Subsequent tests to assess bactericidal efficacy are carried out using the same methodology as above, using an amount of Adesital GS primer equal to 75 % by weight of the whole mixture.

**Example 8: synthesis of dispersion 08 (041PN/20/1 preparation code; 40PN/20/1-4 code of bactericidal tests)**

Into a reactor with 500ml volume it is loaded respectively: Nano 27 graphite marketed by Asbury Carbons (HSAG) (4.0 g) and demineralized water (220 g). At the end of this step, the Silverson mixer is immersed in the reactor and subsequently set at a stirring speed of 5000 rpm. The system is kept under these conditions for 0.5 hours by monitoring the increase in autogenous temperature, which reaches a value of approximately 70°C.

A mixture of chitosan (0.4 g), demineralized water (39.6 g) and glacial acetic acid Sigma Aldrich (0.04 g) is then added.

Mixing of the dispersion thus obtained is continued for a further two hours at a temperature of about 70 °C. At the end of this period, hydrogen peroxide 30% weight/weight Sigma Aldrich (136 g) is added and stirring is continued for a further three hours obtaining an aqueous dispersion based on graphene oxide used in subsequent bactericidal tests.

This nanodispersion after adding an amount of Adesital GS primer equal to 5 % by weight of the whole mixture is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface.

The slide thus obtained does not release the deposited substance and is therefore considered suitable for carrying out bactericidal tests.

**Example 9: synthesis of dispersion 09 (048/PN/20/1 → bactericidal test code performed with 5 % and 75 % Primer)**

Into a reactor with 500ml volume it is loaded respectively: Nano 27 graphite marketed by Asbury Carbons (HSAG) (4.0 g) and demineralized water (256 g). At the end of this step, the Silverson mixer is immersed in the reactor and subsequently set at a stirring speed of 5000 rpm. The system is kept under these conditions for 0.5 hours by monitoring the increase in autogenous temperature, which reaches a value of approximately 70°C.

Next, polyethylene glycol Sigma Aldrich (4 g) is added and stirred for two hours at a temperature close to 70°C. After this period, 136 g of hydrogen peroxide 30% weight/weight Sigma Aldrich is added, continuing stirring for a further three hours. In this way an aqueous dispersion based on graphene oxide which is used in subsequent bactericidal tests is obtained.

This nanodispersion after adding an amount of Adesital GS primer equal to 5 % by weight of the whole mixture is stirred for a period of three hours. At the end of this period, subsequent depositions of this product on previously prepared microscopy slides are carried out, as described in point 2.

Once the depositions have been carried out on the slide with the nanodispersions, it is allowed to dry for about 12 hours in order to favour the fixation of the nanodispersion on the glass surface.

The slide thus obtained does not release the deposited substance and is therefore considered suitable for carrying out bactericidal tests.

Subsequent tests to assess bactericidal efficacy are carried out using the same methodology as above, using an amount of Adesital GS primer equal to 75 % by weight of the whole mixture.

**Example 10: synthesis of dispersion 10 (068/PN/20/1 → bactericidal test code performed with 5 % of two different primers)**

Into a reactor with 1000 ml volume it is loaded respectively: Nano 27 graphite marketed by Asbury Carbons (HSAG) (9 g), demineralized water (312 g), polyethylene glycol-400 Sigma Aldrich (9 g), and 0.9 g of Silver Nitrate marketed by Sigma Aldrich. At the end of this step, the Silverson mixer is immersed in the reactor and subsequently set at a stirring speed of 6000 rpm. The system is kept under these conditions for 1 hour by monitoring the increase in autogenous temperature, which reaches a value of approximately 60°C.
Once this period has elapsed, demineralized water (306 g) is added during about 20 minutes by means of a dropping funnel, continuing then to mix the entire reaction mixture for a further hour.
At the end of this step, a further aliquot of hydrogen peroxide 30% weight/weight Sigma Aldrich (306 g) is added, again by means of a dropping funnel. The system is always kept under stirring for a further hour until a clear aqueous solution containing Chitosan Sigma Aldrich (1.8 g), demineralized water (207 g) and acetic acid (0.45 g) is fed by means of a dropping funnel. The system thus obtained is kept under stirring for a further hour, until the subsequent addition of a mixture composed of Benzalkonium Chloride Sigma Aldrich (9 g) and 45 g of demineralized water by means of a dropping funnel.
The mixture thus obtained is kept under stirring for a further hour until an aqueous dispersion based on graphene oxide which is used in subsequent bactericidal tests is obtained.
An aliquot of this nanodispersion after adding an amount of Adesital GS primer equal to 5 % by weight of the whole mixture is stirred for a period of three hours. At the end of this period, subsequent depositions of this product on previously prepared microscopy slides are carried out, as described in point 2.
In a further case a second aliquot of said nano dispersion is added with San Marco primer at 5% by weight of the whole mixture and stirred for a period of three hours. At the end of this period, subsequent depositions of this product on previously prepared microscopy slides are carried out, as described in point 2.
Once the depositions have been carried out on the slides with the nanodispersions it is allowed to dry for about 12 hours in order to favour the fixation of the nanodispersion on the glass surface.
The slides thus obtained do not release the substance deposited on them and are therefore considered suitable for carrying out bactericidal tests.

**Example 11: synthesis of dispersion 11 with conventional stirring (no Silverson)**

Example 10 is repeated in its entirety by using conventional stirring by means of mechanical blades. The result obtained at the end of this process leads to obtaining unstable mixtures which give rise to phase separation.
The mixture cannot therefore be subjected to antibacterial tests. This result shows the importance and efficacy of high shear mixing (Silverson), compared to conventional mixing using mechanical blades or magnetic stirrers, to obtain stable graphene oxide dispersions.

**Example 12: synthesis of dispersion 12 (086/PN/20/1 → bactericidal test code carried out with 5 % San Marco Primer)**

Into a reactor with 2000 ml volume it is loaded respectively: graphite Nano 27 marketed by Asbury Carbons (HSAG) (13 g), demineralized water (385 g), hydrogen peroxide 30% weight/weight Sigma Aldrich (65 g), polyethylene glycol-400 Sigma Aldrich (6.5 g), acetic acid (6.5 g), Silver Nitrate (1.3 g) marketed by Sigma Aldrich, Chitosan Sigma Aldrich (1.9 g). At the end of this step, the Silverson mixer is immersed in the reactor and subsequently set at a stirring speed of 6000 rpm. The system is kept under these conditions for 1 hour by monitoring the increase in autogenous temperature, which reaches a value of approximately 60°C.
At the end of this step, a further aliquot of hydrogen peroxide 30% weight/weight Sigma Aldrich (299 g) premixed with acetic acid (6.5 g) is added by means of a dropping funnel. The system is kept under stirring for a further two hours until a clear aqueous solution containing Chitosan Sigma Aldrich (4.5 g), demineralized water (413.6 g), acetic acid (6.5 g), Benzalkonium Chloride Sigma Aldrich (13 g) and hydrogen peroxide 30 % weight/weight Sigma Aldrich (78 g) is fed by means of a dropping funnel. The mixture thus obtained is kept under stirring for a further three hours until an aqueous dispersion based on graphene oxide is obtained, used in the subsequent bactericidal and antiviral tests.
An aliquot of this nanodispersion after adding a pre-diluted amount (20% wt of demineralized water) of San Marco primer is stirred for a further three hours in a Silverson mixer. The amount of pre-diluted primer added to the nanodispersion is 5% by weight with respect to the mass of the entire nanodispersion. At the end of the mixing period, the product thus obtained is deposited, by means of an airbrush, on microscopy slides previously prepared, as described in point 2.
At the end of the coating step of the slides, they are allowed to dry for about 12 hours in order to facilitate the fixing of the nanodispersion on the glass surface.

The slide thus obtained does not release the deposited substance and is therefore considered suitable for carrying out tests for the evaluation of antibacterial and antiviral properties.

To perform the antiviral tests, slides coated with San Marco primer alone were also prepared, in order to have the correct comparison with the specimens coated in the manner described above (95 % "dispersion 12" + 5 % San Marco Primer diluted with 20 % of $H_2O$).

The compositions of Examples 1 - 10 and 12 are shown in Tables 1 - 3.

Table 1

| | Example 1 | Example 2 | Example 3 | Example 4 | Example 5 | Example 6 |
|---|---|---|---|---|---|---|
| **HSAG graphite** | 1.2 % | 1.2 % | 1.0 % | 1.1 % | 1 % | 0.9 % |
| **$H_2O_2$ 30 % (w/w)** | 35.7 % | 35.7 % | 35.7 % | 32.2 % | 34 % | 34 % |
| **$AgNO_3$** | 0.1 % | 0.1 % | 0.1 % | 0.1 % | - | 0.1 % |
| **$CH_3COOH$** | 0.8 % | 1.7 % | 2.2 % | 0.8 % | - | - |
| **Chitosan** | 0.1 % | 0.2 % | 0.6 % | 0.2 % | - | - |
| **BAC** | 1.2 % | 1.2 % | 1.0 % | 1.1 % | - | - |
| **PEG-400** | 0.0 % | 0.0 % | 0.0 % | 0.0 % | - | - |
| **$H_2O$** | 60.9 % | 59.9 % | 59.4 % | 64.5 % | 65 % | 65 % |
| **Total** | 100 % | 100 % | 100 % | 100 % | 100 % | 100 % |

Table 2

| | Example 7 | Example 8 | Example 9 | Example 10 | Example 12 |
|---|---|---|---|---|---|
| **HSAG graphite** | 1 % | 1 % | 1 % | 1.0 % | 1.00 % |
| **$H_2O_2$ 30 % (w/w)** | 34 % | 34% | 34 % | 34.0 % | 34.00 % |
| **$AgNO_3$** | - | - | - | 0.1 % | 0.10 % |
| **$CH_3COOH$** | - | 0.01% | - | 0.1 % | 1.50 % |
| **Chitosan** | - | 0.1% | - | 0.2 % | 0.50 % |
| **BAC** | 1 % | - | - | 1.0 % | 1.00 % |
| **PEG-400** | - | - | 1 % | 1.0 % | 0.50 % |
| **$H_2O$** | 64 % | 65 % | 64 % | 62.7 % | 61.40 % |
| **Total** | 100 % | 100 % | 100 % | 100 % | 100 % |
| | | | | | |

Table 3

| | Example 5 (32 PN) | Example 6 (34 PN) | Example 7 (39 PN) | Example 8 (41 PN) | Example 9 (48 PN) |
|---|---|---|---|---|---|
| **HSAG graphite** | 1.0 % | 0.9 % | 1.0 % | 1.0 % | 1.0 % |
| **$H_2O_2$ 30 % (w/w)** | 34.0 % | 34.0 % | 34.0 % | 34.0 % | 34.0 % |
| **$AgNO_3$** | | 0.1 % | | | |
| **$CH_3COOH$** | | | | 0.01 % | |
| **Chitosan** | | | | 0.1 % | |
| **BAC** | | | 1.1 % | | |
| **PEG-400** | | | | | 1.0 % |
| **$H_2O$** | 65 % | 65.0 % | 64.0 % | 64.9 % | 64.0 % |

(continued)

| | Example 5 (32 PN) | Example 6 (34 PN) | Example 7 (39 PN) | Example 8 (41 PN) | Example 9 (48 PN) |
|---|---|---|---|---|---|
| **Total** | 100 % | 100 % | 100 % | 100 % | 100 % |

Antibacterial test results

The results of the tests on the bactericidal properties of the formulations reported in the examples are listed in Table 4 below which shows the following information:

- Number of bacterial cells surviving exposure;
- Difference between Log10 of the number of bacteria at time zero and Log10 of the number of bacteria after the 5-hour assay. This value provides an indication by how many orders of magnitude the number of viable bacteria has dropped compared to the control sample (Adesital GS or San Marco primers)
- Percentage of bacteria remaining viable compared to those measured in the control sample;
- Percentage of killing of bacteria.

Table 4

| *Reference Preparation Dispersion* | *Reference Preparation Slide* | *Antibacterial Test code* | *Total cells Survived* | *Δ Log Abatem ent* | *% viable bacteria after treatment vs. blank* | *% killing* |
|---|---|---|---|---|---|---|
| Comparative 1 sample control | Blank (Adesital GS) | Blank (Adesital GS) | $2.04*10^8$ | N.A. | N.A. | N.A. |
| Comparative 2 sample control | Blank (San Marco) | Blank (San Marco) | $1*10^7$ | N.A. | N.A. | N.A. |
| Comparative 3 commercial product | Doctor Nano® (dark) | Doctor Nano® (dark) | $1.63*10^8$ | 0 | 80.10 | 19.90 |
| Comparative 3 commercial product | Doctor Nano® (light) | Doctor Nano® (light) | $10^7$ | 1 | 4.9 | 95.09 |
| Comparative 4 raw material (graphite) | 50 % 28PN/20/1 50 % Adesital | 50 % 28PN/20/1 50 % Adesital | $2.5*10^7$ | 1 | 12.3 | 87.71498771 |
| Example 1 dispersion 01 | 95 % 015PN/20/1 5 % Adesital | 015PN/20/1 | $2.4*10^3$ | 5 | 0.001 | 99.99882064 |
| Example 2 dispersion 02 | 95 % 016PN/20/1 5 % Adesital | 016PN/20/1 | $< 10^2$ | > 6 | < 0.00004 | > 99.99995135 |
| Example 3 dispersion 03 | 95 % 017PN/20/1 5 % Adesital | 017PN/20/1 | $< 10^2$ | > 6 | < 0.00004 | > 99.99995135 |
| Example 1 dispersion 01 | 95 % 015PN/20/1 5 % SanMarco | 021PN/20/1 | $< 10^2$ | > 6 | < 0.00004 | > 99.99995135 |

(continued)

| *Reference Preparation Dispersion* | *Reference Preparation Slide* | *Antibacterial Test code* | *Total cells Survived* | *Δ Log Abatem*ent | *% viable bacteria after treatment vs. blank* | *% killing* |
|---|---|---|---|---|---|---|
| Example 2 dis-persion 02 | 95 % 016PN/20/1 5 % SanMarco | 022PN/20/1 | < $10^2$ | > 6 | < 0.00004 | > 99.99995135 |
| Example 3 dis-persion 03 | 95 % 017PN/20/1 5 % SanMarco | 023PN/20/1 | < $10^2$ | > 6 | < 0.00004 | > 99.99995135 |
| Example 4 dis-persion 04 | 25 % 024PN/20/1 75 % Adesital | 033PN/20/1-3 | $4.25*10^5$ | 3 | 0.20884521 | 99.79115479 |
| Example 4 dis-persion 04 | 30 % 024PN/20/1-4 70 % Adesital | 36PN/20/1-4 | $1.2*10^4$ | 4 | 0.00589681 | 99.99410319 |
| Example 4 dis-persion 04 | 50 % 024PN/20/1 50 % Adesital | 033PN/20/1-2 | $1.5*10^4$ | 4 | 0.00737101 | 99.99262899 |
| Example 4 dis-persion 04 | 95 % 024PN/20/1 5 % Adesital 1st inoculum | 36PN/20/1-2 | < $10^2$ | > 6 | < 0.00004865 | > 99.99995135 |
| Example 4 dis-persion 04 | 95 % 024PN/20/1 5 % Adesital 2nd inoculum | 36PN/20/1-2 | $2*10^3$ | 5 | 0.00098280 | 99.99901720 |
| Example 4 Dis-persion 04 | 95 % 024PN/20/1 5 % Adesital 3rd inoculum | 36PN/20/1-2 | $2.2*10^6$ | 2 | 1.10073710 | 98.89926290 |
| Example 4 Dis-persion 04 | 50 % 024PN/20/1 50 % Adesital 1st inoculum | 36PN/20/1-3 | < $10^2$ | > 6 | < 0.00004865 | > 99.99995135 |
| Example 4 dis-persion 04 | 50 % 024PN/20/1 50 % Adesital 2nd inoculum | 36PN/20/1-3 | $2.50*10^2$ | 6 | 0.00012285 | 99.99987715 |
| Example 4 dis-persion 04 | 50 % 024PN/20/1 50 % Adesital 3rd inoculum | 36PN/20/1-3 | $4.50*10^5$ | 3 | 0.22113022 | 99.77886978 |
| Example 5 Dis-persion 05 | 95 % 032PN/20/1 5 % Adesital ($H_2O_2$) | 40PN/20/1-1 | $2.5*10^6$ | 2 | 1.22850123 | 98.77149877 |
| Example 6 Dis-persion 06 | 95 % 034PN/20/1 5 % Adesital ($H_2O_2$ + Ag) | 40PN/20/1-2 | $2.2*10^5$ | 3 | 0.10810811 | 99.89189189 |

(continued)

| *Reference Preparation Dispersion* | *Reference Preparation Slide* | *Antibacterial Test code* | *Total cells Survived* | *Δ Log Abatem ent* | *% viable bacteria after treatment vs. blank* | *% killing* |
|---|---|---|---|---|---|---|
| Example 7 dis- persion 07 | 95 % 039PN/20/1 5 % Adesital ($H_2O_2$ + BAC) | 40PN/20/1-3 | 0 | > 6 | < 0.00004865 | > 99.99995135 |
| Example 7 dis- persion 07 | 25 % 039PN/20/1 75 % Adesital ($H_2O_2$ + BAC) | 39PN/20/1 | 3.00E+07 | 1 | 14.74201474 | 85.25798526 |
| Example 8 dis- persion 08 | 95 % 041PN/20/1 5 % Adesital ($H_2O_2$+ CS) | 40PN/20/1-4 | 2*106 | 2 | 0.98280098 | 99.01719902 |
| Example 9 dis- persion 09 | 95 % 048PN/20/1 5 % Adesital ($H_2O_2$ + PEG) | 48PN/20/1 | < $10^2$ | > 6 | < 0.00004865 | > 99.99995135 |
| Example 9 dis- persion 09 | 25 % 048PN/20/1 75 % Adesital ($H_2O_2$ + PEG) | 48PN/20/1 | 2.20E+07 | 1 | 10.81081081 | 89.18918919 |
| Example 10 dispersion 10 | 95 % 68PN/20/1 5 % Adesital | 68PN/20/1 Adesital | $1.2*10^6$ | 2 | 0.58968059 | 99.41031941 |
| Example 10 dispersion 10 | 95 % 068PN/20/1 5 % San Marco | 68PN/20/1 San Marco | $2.9*10^3$ | 5 | 0.00142506 | 99.99857494 |
| Example 11 dispersion 11 | Mixture instability | - | - | - | - | - |
| Example 12 dispersion 12 | 95 % 086PN/20/1 5 % San Marco | 86PN/20/1 (TQ) | < $10^2$ | > 6 | < 0.00004865 | > 99.99995135 |

The first control sample, consisting of the slide covered with Adesital primer only, returned a value coinciding with the inoculation value. For this reason, this material was considered as the reference blank relative to which to compare the bactericidal action of all preparations.

The commercial product Doctor Nano® showed significant bactericidal activity only in the sample exposed to light [Doctor Nano® (light)]. The number of total bacteria is reduced by only one order of magnitude, bringing the kill rate to 95% of the negative control value. Similar results were obtained with commercial reference products [compressed Directa Plus graphene and powdered graphite].

Samples containing only graphene (40PN/20/1-1 ($H_2O_2$) and graphene plus chitosan [40PN/20/1-4 ($H_2O_2$ +chitosan)] showed an abatement of 2 orders of magnitude compared to the negative control, i.e. higher efficacy than commercial products of the prior art. The sample with graphene plus silver nitrate showed an abatement of 3 orders of magnitude.

Samples assayed and prepared according to examples 01, 02, 03 and 04 [16; 17; 21; 22; 23, 36PN/20/1-2 (95%); 36PN/20/1-3 (50%)], containing silver chloride, chitosan and benzalkonium chloride showed the maximum biocidal activity that the measurement system adopted is capable of detecting: no viable colony measurable at the first count dilution ($10^{-2}$), thus a number definitely lower than 99 surviving cells out of the $2.04*10^8$ found on the negative control. An abatement of at least 6 orders of magnitude with a kill rate of over 99.99995135%.

The correlation between the biocidal effect and the percentage of dispersion 04 used with respect to the primer is also evident: samples containing quantities of dispersion 04 equal to or less than 50% by weight [33PN/20/1-3 (25%); 33PN/20/1-2 (50%); 36PN/20/1-4 (30%)] showed lower biocidal activity than samples containing 95% of the same mixture, except for sample [36PN/20/1-3 (50%)] which still showed maximum performance. In the less concentrated sample (25%, 33PN/20/1-3) an abatement of viable microorganisms by 3 orders of magnitude equivalent to 99.89189189% was nevertheless obtained.

A second inoculation of samples [36PN/20/1-2 (95%) "2nd inoculum" and 36PN/20/1-3 (50%) 2nd inoculum], already used and washed, showed a slight decrease in biocidal activity quantifiable as only one order of magnitude of abatement less than the sample used the first time, achieving a 99.999% kill.

Tests conducted on examples 06, 07 and 08 [40PN/20/1-2 ($H_2O_2$+Ag) ; 40PN/20/1-3 ($H_2O_2$+BAC) ; 40PN/20/1-4 ($H_2O_2$ + chitosan)], indicate that dispersion 04 of graphene oxide in the presence of benzalkonium chloride (BAC) guarantees a very high level of abatement of the viable bacterial load, even in the absence of silver nitrate and chitosan.

Maximum biocidal activity (greater than 6 orders of magnitude) was obtained also on dispersion 10, where graphene oxide is used in combination with polypropylene glycol [48PN/20/1 (PEG)].

Another positive result in terms of antibacterial properties was found in the case of example 12, which shows a biocidal activity greater than six orders of magnitude.

Results of antiviral tests

The antiviral efficacy of the composition of Example 12 has been tested according to ISO 21702:2019 standard.

Table 5 summarises the results of the antiviral plaque assay test conducted after 2 or 4 hours of incubation with SARS-CoV-2 virus.

Table 5

| Sample | N[1] ($PFU/cm^2$) | Log N | R[2] (Ut-At) | % viral reduction |
|---|---|---|---|---|
| PRIMER (2 hours) | 2492 | 3.40 | -- | -- |
| Invention coating (2 hours) | 154[3] | 2.19 | 1.21 | 93.84 |
| PRIMER (4 hours) | 0 | -- | -- | -- |
| Invention coating (4 hours) | 0 | -- | -- | -- |

[1] N is the infectivity of the virus recovered per $cm^2$ of sample
[2] R is antiviral activity
[3] Value obtained by analysing the dilutions 1: 10 and 1:100. The cells in the dilution 1:1 are all dead.

Table 6 shows the results of the antiviral plaque assay test conducted at time 0 compared with the results obtained after 2 hours of incubation.

Table 6

| Sample | N[1] ($PFU/cm^2$) | Log N | R[2] (Ut-At) | % viral reduction |
|---|---|---|---|---|
| PRIMER ($T_0$) | 26040 | 4.42 | -- | -- |
| PRIMER (2 hours) | 2492 | 3.40 | 1.02 | 90.45 |
| Invention coating ($T_0$) | 26796 | 4.43 | -- | -- |
| Invention coating (4 hours) | 154[3] | 2.19 | 2.24 | 99.42 |

[1] N is the infectivity of the virus recovered per $cm^2$ of sample
[2] R is antiviral activity
[3] Value obtained by analysing the dilutions 1:10 and 1:100. The cells in the dilution 1:1 are all dead.

The results show that both the slides coated with the "dispersion 12" and those coated only with the "Primer SanMarco" showed antiviral activity against SARS-CoV-2, both after 2 hours and after 4 hours.

## Claims

1. Process for preparing an antimicrobial coating composition comprising the following steps in sequence:

   a. providing an aqueous dispersion comprising graphite, at least one oxidizing agent and optionally at least one antimicrobial agent;
   b. subjecting the aqueous dispersion from step a to high shear homogenization by mixing said dispersion at a mixing speed equal to or greater than 1000 rpm, to obtain an antimicrobial aqueous dispersion comprising graphene oxide;
   c. mixing said aqueous antimicrobial dispersion comprising graphene oxide with at least one film-forming agent to obtain the antimicrobial coating composition, said film-forming agent being selected from acrylic resin, vinyl resin, styrenic resin, alkyd resin, epoxy resin, polyester resin, polyvinyl acetate resin and their mixtures.

2. Process according to claim 1, wherein the aqueous dispersion of step a comprises at least one antimicrobial agent other than graphene oxide.

3. Process according to claim 1, wherein the aqueous dispersion of step a comprises at least two antimicrobial agents other than graphene oxide.

4. Process according to any one of claims 1 to 3, wherein said antimicrobial agents are selected from: quaternary ammonium salt; polyglycol having a molecular weight in the range from 200 - 12.000 g/mol; polysaccharide having antimicrobial properties, preferably chitosan, galactan, mannan and laminarine; metal ion having antimicrobial properties, preferably silver ion, sodium ion and zinc ion and copper ion; chlorinated isothiazole; isothiazolinones; and their mixtures.

5. Process according to any one of claims 1 to 4, wherein said antimicrobial agents comprise at least: quaternary ammonium salt, preferably benzalkonium salt; polyglycol with a molecular weight in the range from 200 - 12.000 g/mol; polysaccharide having antimicrobial properties, preferably chitosan; silver ion. .

6. Process according to any one of claims 1 to 5, wherein the at least one oxidizing agent is selected from: hydrogen peroxide, air in the presence of potassium hydroxide, nitric acid, tert-butyl peroxide, m-chloro perbenzoic acid, ozone, sulfuric acid, permanganate ion, chromate ion, hypochlorite ion and their mixtures.

7. Process according to claim 6, wherein said at least one oxidizing agent is hydrogen peroxide, optionally in admixture with acetic acid.

8. Process according to any one of claims 1 to 7, wherein the antimicrobial coating composition comprises graphene oxide in an amount in the range from 0.1% to 10%, preferably in the range from 0.5% to 5 %, more preferably in the range from 0.8% to 2%, said percentages being percentages by weight based on the weight of the antimicrobial coating composition.

9. Process according to any one of claims 1 to 8, wherein the aqueous dispersion of step a comprises the at least one oxidizing agent in an amount in the range from 0.5 % to 30 %, preferably in the range from 2 % to 20 %, more preferably in the range from 5% to 15%, said percentages being percentages by weight referred to the weight of the aqueous dispersion.

10. Process according to any one of claims 1 to 9, wherein the aqueous antimicrobial dispersion contains the antimicrobial agent (s) at a total concentration in the range from 0.1 % to 20 %, more preferably in the range from 0.5 % to 10 %, the aforesaid percentages being percentages by weight referred to the total weight of the aqueous antimicrobial dispersion.

11. Process according to any one of claims 1 to 10, wherein the antimicrobial coating composition comprises the at least one film-forming agent in an amount in the range from 1 % to 99 %, preferably in the range from 1.5 % to 75 %, more preferably in the range from 3 % to 50 %, said percentages being percentages by weight based on the weight of the antimicrobial coating composition.

12. Antimicrobial coating composition in the form of a mixture comprising graphene oxide and a film-forming agent selected from acrylic resin, vinyl resin, styrenic resin, alkyd resin, epoxy resin, polyester resin, polyvinyl acetate resin

and their mixtures, obtainable by the process according to any one of claims 1 toll.

**13.** Use of an antimicrobial coating composition according to claim 12 to impart antimicrobial properties to a substrate.

**14.** Method for imparting antimicrobial properties to the surface of a substrate, which comprises:

- depositing an antimicrobial coating composition according to claim 12 on at least one surface of a substrate;
- evaporating the liquid phase of the coating composition to obtain an antimicrobial coating film adhering to the surface of said substrate.

**Patentansprüche**

**1.** Verfahren zur Herstellung einer antimikrobiellen Beschichtungszusammensetzung, das die folgenden Schritte in Abfolge umfasst:

a. Bereitstellen einer wässrigen Dispersion, die Graphit, mindestens ein Oxidationsmittel und optional mindestens ein antimikrobielles Mittel umfasst;
b. Unterziehen der wässrigen Dispersion aus Schritt a einer Homogenisierung unter hoher Scherung durch Mischen der Dispersion mit einer Mischgeschwindigkeit von oder größer als 1000 U/min, um eine antimikrobielle wässrige Dispersion zu erhalten, die Graphenoxid umfasst;
c. Mischen der wässrigen antimikrobiellen Dispersion, die Graphenoxid umfasst, mit mindestens einem filmbildenden Mittel, um die antimikrobielle Beschichtungszusammensetzung zu erhalten, wobei das filmbildende Mittel ausgewählt ist aus Acrylharz, Vinylharz, Styrolharz, Alkydharz, Epoxidharz, Polyesterharz, Polyvinylacetatharz und deren Mischungen.

**2.** Verfahren nach Anspruch 1, wobei die wässrige Dispersion aus Schritt a mindestens ein anderes antimikrobielles Mittel als Graphenoxid umfasst.

**3.** Verfahren nach Anspruch 1, wobei die wässrige Dispersion aus Schritt a mindestens zwei andere antimikrobielle Mittel als Graphenoxid umfasst.

**4.** Verfahren nach einem der Ansprüche 1 bis 3, wobei die antimikrobiellen Mittel ausgewählt sind aus: quaternären Ammoniumsalzen; Polyglykol mit einem Molekulargewicht im Bereich von 200 bis 12.000 g/mol; Polysaccharide mit antimikrobiellen Eigenschaften, vorzugsweise Chitosan, Galactan, Mannan und Laminarin; Metallionen mit antimikrobiellen Eigenschaften, vorzugsweise Silberionen, Natriumionen, Zinkionen und Kupferionen; chlorierte Isothiazole; Isothiazolinone; und deren Mischungen.

**5.** Verfahren nach einem der Ansprüche 1 bis 4, wobei die antimikrobiellen Mittel mindestens umfassen: quaternäres Ammoniumsalz, vorzugsweise Benzalkoniumsalz; Polyglykol mit einem Molekulargewicht im Bereich von 200 bis 12.000 g/mol; Polysaccharid mit antimikrobiellen Eigenschaften, vorzugsweise Chitosan; Silberionen.

**6.** Verfahren nach einem der Ansprüche 1 bis 5, wobei das mindestens eine Oxidationsmittel ausgewählt ist aus: Wasserstoffperoxid, Luft in Gegenwart von Kaliumhydroxid, Salpetersäure, tert-Butylperoxid, m-Chlorperbenzoesäure, Ozon, Schwefelsäure, Permanganat-Ionen, Chromat-Ionen, Hypochlorit-Ionen und deren Mischungen.

**7.** Verfahren nach Anspruch 6, wobei das mindestens eine Oxidationsmittel Wasserstoffperoxid ist, optional in Mischung mit Essigsäure.

**8.** Verfahren nach einem der Ansprüche 1 bis 7, wobei die antimikrobielle Beschichtungszusammensetzung Graphenoxid in einer Menge im Bereich von 0,1 % bis 10 %, vorzugsweise im Bereich von 0,5 % bis 5 %, noch bevorzugter im Bereich von 0,8 % bis 2 % umfasst, wobei die Prozentsätze Gewichtsprozente, bezogen auf das Gewicht der antimikrobiellen Beschichtungszusammensetzung, sind.

**9.** Verfahren nach einem der Ansprüche 1 bis 8, wobei die wässrige Dispersion aus Schritt a das mindestens eine Oxidationsmittel in einer Menge im Bereich von 0,5 % bis 30 %, vorzugsweise im Bereich von 2 % bis 20 %, noch bevorzugter im Bereich von 5 % bis 15 % umfasst, wobei die Prozentsätze Gewichtsprozente, bezogen auf das Gewicht der wässrigen Dispersion, sind.

10. Verfahren nach einem der Ansprüche 1 bis 9, wobei die wässrige antimikrobielle Dispersion den oder die antimikrobiellen Wirkstoffe in einer Gesamtkonzentration im Bereich von 0,1 % bis 20 %, vorzugsweise im Bereich von 0,5 % bis 10 % enthält, wobei die vorgenannten Prozentsätze Gewichtsprozente bezogen auf das Gesamtgewicht der wässrigen antimikrobiellen Dispersion sind.

11. Verfahren nach einem der Ansprüche 1 bis 10, wobei die antimikrobielle Beschichtungszusammensetzung das mindestens eine filmbildende Mittel in einer Menge im Bereich von 1 % bis 99 %, vorzugsweise im Bereich von 1,5 % bis 75 %, noch bevorzugter im Bereich von 3 % bis 50 % umfasst, wobei die Prozentsätze Gewichtsprozente, bezogen auf das Gewicht der antimikrobiellen Beschichtungszusammensetzung, sind.

12. Antimikrobielle Beschichtungszusammensetzung in Form einer Mischung, umfassend Graphenoxid und ein filmbildendes Mittel, ausgewählt aus Acrylharz, Vinylharz, Styrolharz, Alkydharz, Epoxidharz, Polyesterharz, Polyvinylacetatharz und deren Mischungen, erhältlich durch das Verfahren nach einem der Ansprüche 1 bis 11.

13. Verwendung einer antimikrobiellen Beschichtungszusammensetzung gemäß Anspruch 12, um einem Substrat antimikrobielle Eigenschaften zu verleihen.

14. Verfahren zum Verleihen antimikrobieller Eigenschaften an die Oberfläche eines Substrats, umfassend:

- Aufbringen einer antimikrobiellen Beschichtungszusammensetzung gemäß Anspruch 12 auf mindestens eine Oberfläche eines Substrats;
- Verdampfen der flüssigen Phase der Beschichtungszusammensetzung, um einen antimikrobiellen Beschichtungsfilm zu erhalten, der an der Oberfläche des Substrats haftet.

**Revendications**

1. Procédé pour préparer une composition de revêtement antimicrobien comprenant les étapes suivantes en séquence:

a. la fourniture d'une dispersion aqueuse comprenant du graphite, au moins un agent oxydant et facultativement au moins un agent antimicrobien;
b. la soumission de la dispersion aqueuse de l'étape a à une homogénéisation à cisaillement élevé par mélange de ladite dispersion à une vitesse de mélange égale ou supérieure à 1000 tr/min, pour obtenir une dispersion aqueuse antimicrobienne comprenant de l'oxyde de graphène;
c. le mélange de ladite dispersion antimicrobienne aqueuse comprenant de l'oxyde de graphène avec au moins un agent filmogène pour obtenir la composition de revêtement antimicrobien, ledit agent filmogène étant choisi parmi la résine acrylique, la résine vinylique, la résine styrène, la résine alkyde, la résine époxy, la résine de polyester, la résine polyacétate de vinyle et leurs mélanges.

2. Procédé selon la revendication 1, dans lequel la dispersion aqueuse de l'étape a comprend au moins un agent antimicrobien autre que l'oxyde de graphène.

3. Procédé selon la revendication 1, dans lequel la dispersion aqueuse de l'étape a comprend au moins deux agents antimicrobiens autres que l'oxyde de graphène.

4. Procédé selon l'une quelconque des revendications 1 à 3, dans lequel lesdits agents antimicrobiens sont choisis parmi: le sel d'ammonium quaternaire; le polyglycol ayant un poids moléculaire dans la plage de 200 à 12 000 g/mol; le polysaccharide ayant des propriétés antimicrobiennes, de préférence le chitosane, le galactane, le mannan et la laminarine; l'ion métallique ayant des propriétés antimicrobiennes, de préférence l'ion argent, l'ion sodium et l'ion zinc et l'ion cuivre; l'isothiazole chloré; les isothiazolinones; et leurs mélanges.

5. Procédé selon l'une quelconque des revendications 1 à 4, dans lequel lesdits agents antimicrobiens comprennent au moins : du sel d'ammonium quaternaire, de préférence du sel de benzalkonium; du polyglycol avec un poids moléculaire dans la plage de 200 - 12 000 g/mol; un polysaccharide ayant des propriétés antimicrobiennes, de préférence du chitosan; un ion argent.

6. Procédé selon l'une quelconque des revendications 1 à 5, dans lequel l'au moins un agent oxydant est choisi parmi: le peroxyde d'hydrogène, l'air en présence d'hydroxyde de potassium, l'acide nitrique, le péroxyde de tert-butyle, l'acide

m-chloroperbenzoïque, l'ozone, l'acide sulfurique, l'ion permanganate, l'ion chromate, l'ion hypochlorite et leurs mélanges.

**7.** Procédé selon la revendication 6, dans lequel ledit au moins un agent oxydant est le peroxyde d'hydrogène, facultativement en mélange avec de l'acide acétique.

**8.** Procédé selon l'une quelconque des revendications 1 à 7, dans lequel la composition de revêtement antimicrobien comprend de l'oxyde de graphène en une quantité dans la plage de 0,1 % à 10 %, de préférence dans la plage de 0,5 % à 5 %, plus préférentiellement dans la plage de 0,8 % à 2 %, lesdits pourcentages étant des pourcentages en poids sur la base du poids de la composition de revêtement antimicrobien.

**9.** Procédé selon l'une quelconque des revendications 1 à 8, dans lequel la dispersion aqueuse de l'étape a comprend l'au moins un agent oxydant en une quantité dans la plage de 0,5 % à 30 %, de préférence dans la plage de 2 % à 20 %, plus préférentiellement dans la plage de 5 % à 15 %, lesdits pourcentages étant des pourcentages en poids par rapport au poids de la dispersion aqueuse.

**10.** Procédé selon l'une quelconque des revendications 1 à 9, dans lequel la dispersion aqueuse antimicrobienne contient le ou les agents antimicrobiens à une concentration totale dans la plage de 0,1 % à 20 %, plus préférentiellement dans la plage de 0,5 % à 10 %, lesdits pourcentages étant des pourcentages en poids par rapport au poids total de la dispersion aqueuse antimicrobienne.

**11.** Procédé selon l'une quelconque des revendications 1 à 10, dans lequel la composition de revêtement antimicrobien comprend l'au moins un agent filmogène en une quantité dans la plage de 1 % à 99 %, de préférence dans la plage de 1,5 % à 75 %, plus préférentiellement dans la plage de 3 % à 50 %, lesdits pourcentages étant des pourcentages en poids sur la base du poids de la composition de revêtement antimicrobien.

**12.** Composition de revêtement antimicrobien sous la forme d'un mélange comprenant de l'oxyde de graphène et un agent filmogène choisi parmi la résine acrylique, la résine vinylique, la résine styrène, la résine alkyde, la résine époxy, la résine de polyester, la résine d'acétate de polyvinyle et leurs mélanges, pouvant être obtenus par le procédé selon l'une quelconque des revendications 1 à 11.

**13.** Utilisation d'une composition de revêtement antimicrobien selon la revendication 12 pour conférer des propriétés antimicrobiennes à un substrat.

**14.** Méthode pour conférer des propriétés antimicrobiennes à la surface d'un substrat, qui comprend:

- le dépôt d'une composition de revêtement antimicrobien selon la revendication 12 sur au moins une surface d'un substrat;
- l'évaporation de la phase liquide de la composition de revêtement pour obtenir un film de revêtement antimicrobien adhérant à la surface dudit substrat.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 109568634 A
- CN 109382003 A
- CN 107163654 A
- CN 103191467 A

### Non-patent literature cited in the description

- **CACACI M. et al.** *Graphene Oxide Coatings as Tools to Prevent Microbial Biofilm Formation on Medical Device*, 2019
- Advances in Microbiology, Infectious Diseases and Public Health. Advances in Experimental Medicine and Biology. Springer, vol. 1282
- *Biomacromolecules*, 2017, vol. 18, 3978-3991
- World Health Organization, WHO. Coronavirus disease (COVID-19) technical guidance: Laboratory testing for 2019-nCoV in humans. *US CDC Real-time RT-PCR Panel for Detection 2019-Novel Coronavirus*, 28 January 2020